Europäisches Patentamt

(19) European Patent Office

Office européen des brevets

(11) Publication number: **0 405 649 B1**

## EUROPEAN PATENT SPECIFICATION

(12)

(45) Date of publication of patent specification: **18.05.94**  (51) Int. Cl.⁵: **A23F 5/04, A23F 5/02**

(21) Application number: **90201593.2**

(22) Date of filing: **19.06.90**

(54) Improved process for dark roasting coffee beans.

(30) Priority: **30.06.89 US 374401**

(43) Date of publication of application:
**02.01.91 Bulletin 91/01**

(45) Publication of the grant of the patent:
**18.05.94 Bulletin 94/20**

(84) Designated Contracting States:
**AT BE CH DE DK ES FR GB GR IT LI LU NL SE**

(56) References cited:
**EP-A- 0 132 877      EP-A- 0 337 541
DE-A- 2 531 390       GB-A- 1 274 806
US-A- 2 444 217       US-A- 3 106 470
US-A- 3 589 912       US-A- 4 540 591**

(73) Proprietor: **THE PROCTER & GAMBLE COM-
PANY
One Procter & Gamble Plaza
Cincinnati Ohio 45202(US)**

(72) Inventor: **Kirkpatrick, Steven Jacob
5076 Springdale Rd.
Cincinnati, Ohio 45251(US)**
Inventor: **Gutwein, Roger William
5519 Dry Ridge Rd.
Cincinnati, Ohio 45247(US)**
Inventor: **Bertagna, Richard Walter
5486 Old Farm Dr.
Mason, Ohio 45040(US)**

(74) Representative: **Canonici, Jean-Jacques et al
Procter & Gamble European Technical Cen-
ter N.V.
Temselaan 100
B-1853 Strombeek-Bever (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

TECHNICAL FIELD

This invention relates to the processing of coffee beans to make a roast coffee product. More particularly, it relates to an improved process for making dark roast coffee beans.

The roast coffee throughout the U.S. falls within fairly narrow color limits. Most commercial ground coffee can be described as Medium to Medium-Light in color. One important exception to this general rule are after-dinner or gourmet-type coffees, which are Medium-Dark to Dark in color. The most popular after-dinner coffees are dark roasted and include *espresso*, French and Vienna roast coffees.

Espresso, which is Italian for "pressed out", is a very strong dark roast coffee made very rapidly by forcing a combination of steam and water through about twice the normal quantity of grounds. Traditionally, the dark espresso beans are finely ground immediately prior to steam brewing. The espresso preparation method seems to have been developed in Italy just before World War II. Therefore, the dark roast beans used in espresso preparation are usually referred to as "Italian" roast. "French" and "Vienna" roast coffees are nearly as dark as "Italian" roast and have been popular throughout many parts of Europe for nearly 100 years.

Sivetz, "Examining the Degree of Roast", Tea & Coffee Trade Journal, Vol 160, No. 9, pp 14,16 (September 1988) speculates on where dark roast beans occur and why. Most of his attention is focussed on French and Italian roasts, since these beans are dark roasted to the greatest degree. Sivetz makes the following observations relating to Dark roasts: First, Low grade coffee beans with many defects will burn and scorch more readily than wholesome beans, causing non-uniform roasted bean colors and tastes. Second, Dark roast coffee must be prepared carefully, because they are very susceptible to fires and scorching. Third, Dark roast coffees are oily, when prepared improperly with poor quality beans. Unfortunately, in the U.S. and in Latin America, where low grade beans high in defects are used to prepare dark roasts, oiliness is often regarded by the uneducated as a characteristic of dark roast. Sivetz attributes the wide spread use of poor quality beans in dark roasts to roasters with the attitude: "that if I'm going to burn the beans, why should I use good beans?"

Sivetz et al., "Coffee Technology", AVI Publishing Company, Westport, Conn., pp. 232 (1979) also points out the care needed to prepare dark roasts without scorching the roast beans. Darker roasts are often held longer in the roaster cylinder than lighter roasts. Sivetz et al. also indicates that dark roasts leave oil and caramelized sugar deposits on the cylinder wall. These deposits under prolonged exposure to continual roasting conditions may cause partial or complete closure of the cylinder wall perforations. Also, if these deposits carbonize, they are exceedingly difficult to remove. Closed holes contribute to localized overheating of beans and the beginning of bean fires. Thus, the roaster cylinder wall perforations must be cleaned routinely.

German patent application 2531390 discloses an apparatus and a process for roasting of coffee beans in a fluidized bed.

US Patent 4,540,591, Dar et al., discloses a 4 step process of steaming, drying, roasting and cooling of coffee beans.

EP-A-132 877 discloses a process to improve brewed coffee holding characteristics by quenching of the roasted coffee beans to a temperature below 149 °C. The resulting roasted coffee (Hunter L colour 19 to 23) has a tamped density from about 0.34 to 0.41 $g/cm^2$ a Hunte delta L colour of less than 10.

It is therefore an object of the present invention to produce a relatively oil-free and uniformly dark roasted bean without the delicate roaster control necessary to produce conventional, commercial dark roast coffees.

It is also an object of the present invention to dark roast poor quality beans with less tipping and burning when compared to present dark roast processing.

It is yet another object of the present invention to reduce the incidence of roaster fires during dark roasting.

It is also an object of the present invention to reduce the level of oil and caramelized sugar deposits on the roaster walls.

Furthermore, it is also an object of the present invention to completely dark roast the beans faster than conventional dark roasting processes.

These and other objects of the invention will become clear by the disclosure herein.

## SUMMARY OF THE INVENTION

The present invention relates to a process for producing dark roast coffee beans comprising the steps of (1) pre-drying green coffee beans to a moisture content of less than about 10% by weight, (2) roasting the pre-dried beans to a Hunter L-color of from about 12 to about 20; and (3) cooling the roasted beans. The resulting dark roasted beans have a Hunter ΔL-color of less than about 1.2.

The present invention also relates to the dark roast beans and the resulting ground/flaked coffee products.

## BRIEF DESCRIPTION OF THE DRAWING

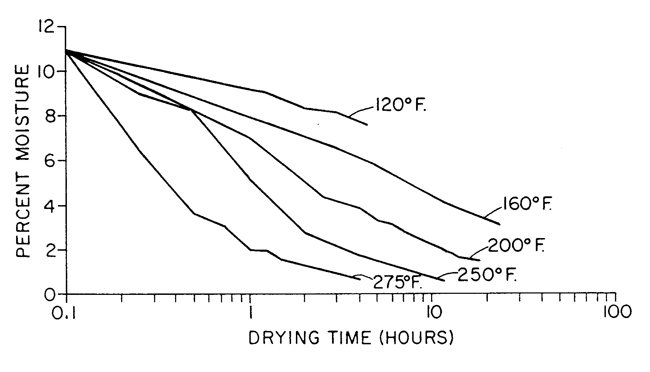

Figure 1 shows a typical drying curve for a typical blend of green coffee beans having an initial moisture content of 11% that are air-dried on a model 42200 Wenger belt dryer under 300 pound (136 kg) batch conditions. The blend consists of equal parts Robusta, natural Arabica, and washed Arabica beans.

## DETAILED DESCRIPTION OF THE INVENTION

All percents and ratios used herein are on a weight basis unless otherwise indicated.

### Definitions

As used herein, the term "dark roast" relates to a roast coffee bean which has a roasted whole bean and a ground roast Hunter L-color of from about 12 to about 20. Dark roast coffees include "espresso", "French", "Italian" or "Vienna" roast coffees.

As used herein, the term "pre-drying" relates to a green bean moisture removal operation which occurs prior to roasting, typically, less than 1 day prior to roasting.

As used herein, the terms "tipping" and "burning" relate to the charring of the ends and outer edges of a bean during roasting. Tipping and burning of beans results in a burnt flavor in the resulting brewed beverage.

The term "density", as used herein, refers to bulk density, i.e. the overall density of a plurality of particles measured after vibratory settlement.

As used herein, the term "percent moisture" relates to the amount of water in a green bean, a roasted bean or ground and roasted bean on a wet-basis. Moisture content is determined by oven drying. First, the material is ground to a mean particle size of about 900 $\mu$m. Ten grams of ground material is then weighed into a drying dish and placed in a 105°C drying oven for 16 hours. The weight loss from the sample represents the moisture in the original sample and, accordingly, is used to calculate the percent moisture.

### Pre-drying of Coffee Prior to Roasting

In the process of the present invention, green coffee beans having an initial moisture content greater than 10%, preferably from 10% to 14%, most preferably from 10% to 12%, are first dried to a moisture content of less than 10%, preferably less than 7%, most preferably 3%.

The drying stage, according to the present invention, results in partially dehydrated coffee bean without causing any significant roasting-related reactions to take place. Roasting reactions are described in *Sivetz*, *supra*, pp. 250-262, incorporated herein by reference.

Without being bound by theory, it is believed that the key to the pre-drying step of the present invention is that the moisture content of the resulting beans is relatively uniform throughout the bean, i.e. the moisture profile within the beans has equilibrated. Accordingly, the method of pre-drying is not critical, provided the moisture content of the resulting bean is uniformly low and no burning or roasting occurs. Beans with high moisture contents in their center and low moisture contents near the outer edges should not be charged to the roaster until such equilibrium occurs.

Green bean drying involves the simultaneous application of heat and removal of moisture from the green beans. As applied to the present invention, moisture removal, i.e. dehydration, can be accomplished by heated air, heated surfaces, microwave, dielectric, radiant or freeze dryers. These drying operations are described in Fellows, Food Processing Technology, Chapters 14, 17 and 20, incorporated herein by reference. The preferred drying method is heated air drying; however, inert gases (e.g. helium and nitrogen) can also be used. Fluidized bed heated air dryers, rotary dryers, belt dryers, tray dryers, continuous dryers and conveyor and convective dryers are particularly preferred; rotary or belt dryers are most preferred.

Fluidized bed dryers may be batch or continuous. Continuous fluidized bed dryers can befitted with a vibrating base to help to advance the beans. Continuous "cascade" systems, in which the beans are discharged under gravity from one tray to next can be used for higher production rates. Fluidized bed dryers suitable for use in the present invention include those manufactured by APV Crepaco, Inc., Attleboro Falls, MA; Bepex Corp., Rolling Meadows, IL; Littleford Bros., Inc., Florence, KY; and Wolverine Corporation, Merrimac, MA.

Rotary dryers consist of a slightly inclined rotating metal cylinder, fitted with internal flights to cause the beans to cascade through a stream of hot air as they advance through the dryer. Air flow can be parallel or counter-current to the beans. Rotary dryers suitable for use in the present invention include those manufactured by APV Crepaco, Inc., Tonawanda, NY; Aeroglide Corp., Raleigh, NC; Blaw-Knox Food & Chemical Equipment Co., Buflovak Division, Buffalo, NY; and Littleford Bros. Inc., Florence, KY.

Belt dryers suitable for use in the present invention include those manufactured by APV Crepaco, Inc., Attleboro Falls, MA; The National Drying Machinery Co., Philadelphia, PA; C. G. Sargent's Sons Corp., Westford, MA; Aeroglide Corp., Raleigh, NC; and Proctor & Schwartz, Inc., Horsham, PA. Chamber dryers suitable for use in the present invention include those manufactured by Wyssmont Company, Inc., Fort Lee, NJ. Continuous conveyor dryers suitable for use in the present invention include those manufactured by APV Crepaco, Inc., Attleboro Falls, MA; The National Drying Machinery Co., Philadelphia, PA; C. G. Sargent's Sons Corp., Westford, MA; The Witte Co., Inc., Washington, NJ; Wyssmont Company, Inc., Fort Lee, NJ; Proctor & Schwartz, Inc., Horsham, PA; Wenger Mfg. Inc., Sabetha, KS; Werner & Pfleiderer Corp., Ramsey, NJ; and Wolverine Corp., Merrimac, MA. Convective dryers suitable for use in the present invention include those manufactured by APV Crepaco, Inc. Tonawanda, NY; The National Drying Machinery Co., Philadelphia, PA; Wyssmont Company, Inc., Fort Lee, NJ; Proctor & Schwartz, Inc., Horsham, PA; and Wenger Mfg. Inc., Sabetha, KS.

The drying step should be conducted under gentle conditions. Large heat inputs and temperature differentials can result in tipping and burning of the bean or premature roast-related reactions. Drying curves for a typical blend of green coffee beans with an initial moisture content of 11% are shown in Figure 1. The drying curve was established on a Model 42200 Wenger Belt Dryer under 136 kg (300 lb.) batch conditions. The blend consists of equal parts Robusta, natural Arabicas and washed Arabica beans. Preferably, commercial drying is achieved by a convective air stream, which enters the drying compartment containing from 0% to 70% moisture at a temperature of from 70° to 350°F (21° to 177°C), preferably 160° to 250°F (71° to 121°C) for from 1 to 24 hours, preferably from 1 to 6 hours, most preferably from 2 to 6 hours.

Slow drying using conventional drying units, like the ones described above, are easily fitted into existing commercial roasting lines and are the preferred commercial embodiment of the present invention. However, other drying schemes which achieve the same uniformity of moisture will produce a similar result and are also contemplated by the present invention. Examples of alternative drying schemes include: vacuum drying; warehouse-type drying (i.e. storage in a dehumidified warehouse for several months); or pulse drying by heating the beans with one or more short pulses of heat, e.g., 1 sec.-1 min. at 300°-1000°F (149°C-538°C), and then allowing the moisture and temperature within the bean to equilibrate.

Warehouse-type drying can be performed in large rooms, warehouse or storage silos. The coffee may remain in the shipping bag provided air is free to flow in and out of the bag (e.g. a coarse weave burlap bag). Slow drying of this type is typically accomplished with air at 70° to 120°F (21° to 49°C) and a relative humidity of less than 25%. Optionally, a small air flow is distributed throughout the drying environment. The time required to achieve desired moistures is a function of air distribution, air velocity, air temperature, air relative humidity and the initial moisture content of the green beans. Typically, the moisture levels are monitored periodically during the warehouse-type dryer period. The drying medium is not limited to air; inert gases (e.g. nitrogen and helium) can also be used.

After the green coffee beans have been uniformly pre-dried and the moisture profile has equilibrated, they are ready for roasting. The beans should have minimal contact, preferably no contact, with moisture to prevent the absorption thereof. The pre-dried beans should not be allowed to rehydrate to a moisture level greater than 10%, preferably not greater than 7% and most preferably not greater than 3%. It is desirable, but not critical, to charge the beans to the roaster as soon as possible after pre-drying.

Roasting of the Pre-Dried Beans

The process of the present invention combines the above pre-drying stage with a commercial roaster operating under dark roasting conditions.

4

Roasters suitable for use in the present invention can utilize any method of heat transfer. However, convective heat transfer is preferred, with forced convection being most preferred. The convective media can be an inert gas or, preferably, air. Typically, the pre-dried beans are charged to a bubbling bed or fluidized bed roaster where a hot air stream is contacted with the bean. Dark Roasters operate at inlet air temperatures of from 350° to 1200°F (177° to 649°C), preferably from 400° to 800°F (204° to 427°C), at roast times from 10 seconds to 15 minutes, preferably from 30 seconds to 10 minutes.

In a typical batch dark roast, a Thermalo Model 23R roaster manufactured by Jabez Burns, is charged with from 100 to 300 lbs. (from 45 to 136kg) of dried beans. The beans are roasted for from 1 to 3 minutes at a burner rate of from 1 million to 2 million Btu/hr (293 kW to 586 kW) and an initial preheat temperature of from 300° to 700°F (149° to 371°C).

In a typical continuous dark roast, a Jetzone Model 6452 fluidized bed roaster, manufactured by Wolverine Corp., is operated with an inlet air temperature of from 500° to 700°F (260° to 371°C) and a residence time of from 15 to 60 sec at typical burner rates of 2.4 MM Btu/hr (703 kW).

Roasting equipment and methods suitable for roasting coffee beans according to the present invention are described, for example, in Sivetz, *Coffee Technology*, Avi Publishing Company, Westport, Conn. 1979, pp. 226-246, incorporated herein by reference. See also, U.S. Patent 3,964,175 to Sivetz, issued June 22, 1976, which discloses a method for fluidized bed roasting of coffee beans.

Final roasting according to the present invention is characterized by the color of the final roast bean.

Roast Bean Color: The coffee beans can be roasted to any desired roast color. Darker roasts develop strong flavors that are very desirable in many European countries. Lighter roasts can be used to produce clear, reddish cup colors with slightly weaker flavors. The Hunter Color "L" scale system is generally used to define the color of the coffee beans and the degree to which they have been roasted. A complete technical description of the system can be found in an article by R. S. Hunter "Photoelectric Color Difference Meter", *J. of the Optical Soc. of Amer.*, 48, 985-95 (1958). In general, it is noted that Hunter Color "L" scale values are units of light reflectance measurement, and the higher the value is, the lighter the color is since a lighter colored material reflects more light. In particular, in the Hunter Color system the "L" scale contains 100 equal units of division; absolute black is at the bottom of the scale (L=0) and absolute white is at the top (L=100). Thus, in measuring degrees of roast, the lower the "L" scale value the greater the degree of roast, since the greater the degree of roast, the darker is the color of the roasted bean.

The roast coffee beans of the present invention have a Hunter L-color of from 12 to 20, preferably from 15 to 18.

Cooling the roasted beans.

As soon as the desired roast bean color is reached, the beans are removed from the heated gases and promptly cooled by typically ambient air and/or a water spray. Cooling of the beans stops the roast-related pyrolysis reactions.

Water spray cooling, also known as "quenching", is the preferred cooling method in the present invention. The amount of water sprayed is carefully regulated so that most of the water evaporates off. Therefore, minimal water is absorbed by the roasted beans, e.g. typically less than 6%.

Grinding of the roaster beans.

After the roast coffee beans have been cooled according to the present invention, they can be prepared for brewing. Coffee brewing is achieved by percolation, infusion or decoction. During a brewing operation, most coffee solubles and volatiles are extracted into an aqueous medium. This extraction is made more efficient by breaking down the whole bean into smaller pieces. This process is generally referred to as "grinding". Preferred grinding techniques result in an average particle size of from 100 to 3000 microns.

Particle size also impacts the brew strength of coffees prepared from different brewing apparatus. Automatic Drip Coffee grinds typically have an average particle size of 600$\mu$m and percolator grinds are typically from 1500 $\mu$m to 2200$\mu$m.

Descriptions of grinding operations suitable for use in the present invention are described in Sivetz, supra. pp. 265-276, incorporated herein by reference.

The roast and ground coffee beans of the present invention have a ground tamped bulk density of from 0.25 to 0.45 g/cm$^3$, preferably from 0.28 to 0.42 g/cm$^3$.

Flaking of the resulting ground & roast coffee

Recent developments have lead to "flaked" coffees with improved characteristics. Flaked coffee is described in: U.S. Patent 4,331,696; U.S. Patent 4,267,200; U. S. Patent 4,110,485; U. S. Patent 3,660,106; U. S. Patent 3,652,293; and U. S. Patent 3,615,667, all of which are incorporated herein by reference.

Flaked ground & roast products of the present invention are desirable. Preferred flaked products are produced by grinding the roast coffee to an average particle size from 300 to 3000$\mu$m, normalizing the ground product, and then milling the coffee to a flake thickness of from 2 to 40 thousandths of an inch (51 to 1016$\mu$m), preferably from 10 to 30 (254 to 762$\mu$m), most preferably from 20 to 24 (508 to 610$\mu$m).

Characteristics of the Roasted Products

The benefits of the present invention are observed by roasting the beans to produce a dark roast bean. Surprisingly, it has been discovered that when green beans are pre-dried prior to roasting according to the present invention, the resulting roasted beans exhibit the following characteristics:

More Uniform Roasting: The roasted beans produced according to the present invention show a high degree of roast uniformity when compared to non-dried beans roasted in a similar manner.

Less Bean to Bean Color Variation: Bean-to-bean color variation within the roast is an indication of uniformity of roast. Color variations within the bean are also another indicator of roast uniformity. Both are important to the aesthetic appeal of the coffee to the consumer.

The Hunter L-scale system is employed in the present invention to establish uniformity of roast within the bean. Hunter L-color of the roast bean is normally greater than that of the ground product. The reason for this effect is that the exterior of the roast bean is roasted to a greater degree (i.e. darker) than the interior of the bean. As used herein, the term Hunter $\Delta$ L-color relates to this decrease in the Hunter L-color of roast beans when compared before and after grinding and is defined as follows:

$$\text{Hunter } \Delta \text{ L-color} = \text{L}_{before} - \text{L}_{after}$$

where,

$\text{L}_{before}$ = Hunter L-color of the whole roast bean; and

$\text{L}_{after}$ = Hunter L-color of the ground roast bean.

Hunter $\Delta$L-color values for roast and ground coffee according to the present invention are less than 1.2, preferably less than 0.6.

Increased Flavor Strength: The brew flavor strength of the coffees produced by the present invention is typically greater than that produced by prior 497.66 g (16-ounce) coffee blends, and even fast roasted non-dried reduced density coffee blends.

Reduced Roast Bean Oiliness: Bean oiliness is a notorious problem in the dark roasting art. The roast beans of the present invention exhibit a markedly lower degree of oiliness when compared to commercial dark roast coffees under similar roaster conditions.

Density: The whole roast tamped bulk density of the beans is from 0.28 to 0.45 g/cm$^3$, preferably from 0.30 to 0.42 g/cm$^3$. The ground tamped bulk density is from about 0.25 to 0.45 gm/cc preferably from 0.28 to 0.42 g/cm$^3$.

Roast Time Reduction: Reduced roast bean densities are achieved under the roast conditions described above in from 10 seconds to 15 minutes, preferably from 30 seconds to 10 minutes. It has been observed that the roasting times of the present invention are 2/3 those observed when no pre-drying is utilized.

Preferred Coffee Varieties

It has been observed that the process of the present invention is suitable for roasting all varieties of coffee. However, the flavor character of certain coffee is actually improved by the claimed process. Milds and washed Arabicas show a slight improvement, while Brazilians and other natural Arabicas show more improvement. Robustas are improved the most and have a noticeably less harsh flavor. Accordingly, Brazilians, natural Arabicas, washed Arabicas and Robustas are preferred beans for use in the present invention. Robustas being the most preferred.

The blending of beans of several varieties, before and after roasting or pre-drying, is also contemplated by the present invention. Likewise, the processing of decaffeinated or partially decaffeinated coffee beans are also contemplated by the present invention.

ANALYTICAL METHODS

I. Whole Roast Tamped Bulk Density Determination:

This method specifies the procedure for determining the degree of puffing that occurs in the roasting of green coffee. This method is applicable to both decaffeinated and non-decaffeinated whole roasts.

Apparatus

Weighing container: 1,000 ml stainless steel beaker or equivalent
Measuring container: 1,000 ml plastic graduated cylinder; 5 ml graduations
Scale: 0.1 gm sensitivity
Vibrator: Syntrol Vibrating Jogger; Model J-1 or equivalent. Syntron Company - Homer City, PA
Funnel: Plastic funnel with tip cut off to about (1") 2.54 cm outlet
Automatic Timer: Electric, Dimco-Gray; Model No. 171 or equivalent

Operation

Weigh 200 grams of whole bean coffee to be tested into beaker. Place the graduated cylinder on the vibrator. Using the funnel, pour the coffee sample into the cylinder. Level the coffee by gently tapping the side of the cylinder. Vibrate 30 seconds at No. 8 setting. Read volume to nearest 5 ml.

Tamped density can be determined by dividing the weight of the coffee by the volume occupied (after vibrating) in the graduated cylinder.

$$\text{Tamped Density} = \frac{\text{Weight of Coffee (gms)}}{\text{Volume of Coffee (cc)}}$$

II. Ground Tamped Bulk Density Determination:

This method is applicable to ground or flaked product.

Apparatus

Weighing container: 1,000 ml glass beaker or equivalent
Measuring container: 1,000 ml plastic graduated cylinder; 10 ml graduations
Scale: 0.1 g or 0.311 g (0.01 ounce) sensitivity
Vibrator: Syntron Vibrating Jogger - Model J-1A (or equivalent). Syntron Company - Homer City, PA. (Calibrated by Factory Analytical Services)
Funnel: Plastic funnel with tip cut off to about 1" outlet hole.
Automatic timer (optional): Automatic timer - automatic shutoff and reset.
Calibration device: Amplitude Meter and Transducer Mod. AM-100, Power Time Control, Indiana, PA.

Calibration of Syntron Vibrating Jogger

An amplitude of 0.889 mm (0.035 inches) results in consistent density measurements with little product break-up when using the 300 gram density method.

Operation

Weigh 300 grams of coffee to be measured into the beaker. Place the graduate cylinder on the vibrator table. Pour the coffee through the funnel into the graduate cylinder. Level the coffee by gently tapping the side of the cylinder. Vibrate for one minute. Read volume.

Calculation

$$\text{Tamped Density in } g/cm^3 = \frac{300 \text{ g}}{\text{Volume of coffee in ml.}}$$

The following examples are specific embodiments of the present invention but are not intended to limit it:

EXAMPLE 1

Thermalo Roast

A blend of green coffee beans with an initial moisture content of 11%, consisting of 1/3 washed Arabicas, 1/3 natural Arabicas, and 1/3 natural Robustas are pre-dried at 250°F (121°C) for 2 hours on a Wenger belt dryer. The pre-dried beans are then roasted in a Thermalo roaster, Model Number 23R, manufactured by Jabez Burns, under fast conditions using 100 lb. batches (45 kg) and a gas burner input rate of 1.7 million Btu/hr (498 kW). Roasting time of 130 seconds is used. Whole roast tamped bulk density is less than 0.35 g/cm$^3$. The whole roast beans have a Hunter L-value of 16. The roast beans are then water quenched. The quenched coffees are then cracked, normalized and ground to an automatic drip coffee grind of 900μm and flaked to 20 thousandths of an inch (508μm) flake thickness. Ground tamped bulk densities is less than 0.335 g/cm$^3$ and the Hunter ΔL is less than 0.6. The flavor strength of the resulting coffee is greater than that of an 357.69 g (11.5 oz.) ground and roast coffee produced without pre-drying.

EXAMPLE 2

Jetzone Fluidized Bed Roast

Green Robusta coffee beans are pre-dried at 160°F (71°C) for 6 hours in a Wenger belt dryer at a feed rate of 1300 pounds (590kg) per hour. Next, the pre-dried beans are cooled with dry ambient air and then roasted at 600°F (315°C) for 55 seconds on a Jetzone fluid bed roaster, Model 6452, manufactured by Wolverine Corp. with a burner rate of 2.4 mm Btu/hr (703kW) and an air recycle of 400 cfm (11,300 liters/min.). The roast beans are cooled to ambient temperature with 70°F (21°C) air at a relative humidity of 40%. The resulting whole roast tamped bulk density is less than 0.34 g/cm$^3$ and the Hunter L-value is 16.

EXAMPLE 3

Fluidized Bed Roast

Pre-dried coffee beans, prepared according to Example I, are fast roasted in a Jetzone, Model 6452, two-stage, fluidized bed, continuous coffee roaster manufactured by Wolverine Corp. at 440°-470°F (227°-243°C) for 60 seconds in the first stage, and 515°-545°F (268°-285°C) for 60 seconds in the second stage. The roaster is operated at a 1070 pound (486 kg) per hour feed rate and at a 2.4 btu/hr (703 kW) burner rate. The roast beans are cooled to ambient temperature with 70°F (21°C) air at a relative humidity of 40%. The resulting whole roast tamped bulk density is less than 0.38 and the whole roast Hunter L-color is 16. The beans are then ground to an automatic drip coffee grind of 900 μm. The Hunter ΔL value is less than 0.6 and the ground tamped bulk density is 0.36. The flavor strength of the resulting coffee is greater than that of a 404.35 g (13-oz. ground) and roast coffee prepared without pre-drying.

EXAMPLE 4

Thermalo Roast

Three batches of green coffee beans with an initial moisture content of 11% are pre-dried at 160°F (71°C) for 6 hours on a Wenger belt dryer. The batches consist of a natural Arabica batch, a Robusta batch and a washed Arabica batch. The pre-dried beans are then roasted on a Thermalo roaster, Model Number 23R, manufactured by Jabez Burns, under fast conditions using 100 lb. (45 kg) batches and a gas burner input rate of 1.7 million Btu/hr (498 kW). A roast time of 130 seconds is used. Whole roast tamped bulk density is less than 0.35 g/cm$^3$. The roast beans are then water quenched and the three batches are combined in equal proportions. The whole roast Hunter L value is in the range of from 15 to 20. The quenched coffees were then cracked, normalized and ground to an automatic drip coffee grind of 900$\mu$m, and flaked to 20 thousandths of an inch (508$\mu$m) flake thickness. Ground tamped bulk density is less than 0.335 g/cm$^3$ and the Hunter $\Delta$L value is less than 0.6. The flavor strength of the resulting coffee is greater than that of a 311.03 g (10 oz.) ground and roast coffee prepared without pre-drying.

EXAMPLE 5

The roast coffee of Example 2 is ground using a Gump Model 666 grinder manufactured by Modern Press. The grinding conditions are set to yield an average particle size of from 300 to 3000 $\mu$m. The resulting Hunter $\Delta$L is less than 0.6. The flavor strength of the resulting coffee is greater than that of an 357.69 g (11.5 oz.) ground and roast coffee.

EXAMPLE 6

The ground and roast coffee of Example 5 is flaked using an 457.2 mm x 838.2 mm (18"x33") Ross roll mill hydraulic flaking unit manufactured by Ross Equipment Co. The milling gap is set to yield a flake thickness of from 2 to 40 thousandths of an inch (51 to 1016$\mu$m).

**Claims**

1. A process for producing dark roasted coffee beans having a Hunter $\Delta$ L colour value, being the difference between the Hunter L colour of the whole roast bean and the ground roast bean, of less than 1.2, said process being characterised by comprising the following combination of steps:
   (a) pre-drying green coffee beans at a temperature from 21°C to 177°C for from 1 to 24 hours to a moisture content of less than 10% by weight;
   (b) roasting the pre-dried beans to a Hunter L-colour of from 12 to 20; and
   (c) cooling the roasted beans.

2. A process according to claim 1 characterized in that the pre-dried green bean moisture content after step (a) is less than 7% and the dark roasted beans have a Hunter $\Delta$ L-colour value of less than 0.6.

3. A dark roast coffee bean product producible by the process of claim 1 or 2 said product having a whole bean density from 0.28 to 0.45 g/cm$^3$ and a Hunter L-colour value from 12 to 18, said product being characterised in that the Hunter $\Delta$ L-colour value, being the difference between the Hunter L colour of the whole roast bean and the ground roast bean, is less than 1.2.

4. A dark roast coffee bean product according to claim 3 characterised in that the whole bean density is from 0.30 to 0.42 g/cm$^3$, the Hunter $\Delta$ L-colour value is less than 0.6 and the Hunter L-colour value is from 15 to 18.

5. A dark roast coffee bean product according to claim 3 or 4 characterised in that the roasted beans are ground to an average particle size of from 100 to 1000 $\mu$m.

6. A dark roast coffee bean product according to claim 5 characterized in that the roasted beans are flaked.

**Patentansprüche**

1. Verfahren zur Herstellung von dunkel gerösteten Kaffeebohnen mit einem Hunter-$\Delta$L-Farbwert, der die Differenz zwischen der Hunter-L-Farbe der ganzen gerösteten Bohne und der gemahlenen gerösteten Bohne darstellt, von weniger als 1.2, welches Verfahren **dadurch gekennzeichnet** ist, daß es die folgende Kombination von Schritten umfaßt:
   (a) Vortrocknen grüner Kaffeebohnen bei einer Temperatur von 21°C bis 177°C während 1 bis 24 Stunden auf einen Feuchtigkeitsgehalt von weniger als 10 Gew.-%;

(b) Rösten der vorgetrockneten Bohnen auf eine Hunter-L-Farbe von 12 bis 20; und

(c) Kühlen der gerösteten Bohnen.

**2.** Verfahren nach Anspruch 1, **dadurch gekennzeichnet**, daß der Feuchtigkeitsgehalt der vorgetrockneten grünen Bohne nach der Stufe (a) weniger als 7% beträgt und die dunkel gerösteten Bohnen einen Hunter-$\Delta$L-Farbwert von weniger als 0,6 aufweisen.

**3.** Dunkel geröstetes Kaffeebohnenprodukt erhältlich nach dem Verfahren gemäß Anspruch 1 oder 2, welches Produkt eine Dichte der ganzen Bohne von 0,28 bis 0,45 g/cm$^3$ und einen Hunter-L-Farbwert von 12 bis 18 aufweist, welches Produkt **dadurch gekennzeichnet** ist, daß der Hunter-$\Delta$L-Farbwert, der die Differenz zwischen der Hunter-L-Farbe der ganzen gerösteten Bohne und der gemahlenen gerösteten Bohne ist, weniger als 1,2 beträgt.

**4.** Dunkel geröstetes Kaffeebohnenprodukt nach Anspruch 3, **dadurch gekennzeichnet**, daß die Dichte der ganzen Bohne 0.30 bis 0,42 g/cm$^3$, der Hunter-$\Delta$L-Farbwert weniger als 0,6 und der Hunter-L-Farbwert 15 bis 18 betragen.

**5.** Dunkel geröstetes Kaffeebohnenprodukt nach Anspruch 3 oder 4, **dadurch gekennzeichnet**, daß die gerösteten Bohnen auf eine durchschnittliche Teilchengröße von 100 bis 1000 $\mu$m gemahlen worden sind.

**6.** Dunkel geröstetes Kaffeebohnenprodukt nach Anspruch 5, **dadurch gekennzeichnet**, daß die gerösteten Bohnen zu Flocken verarbeitet worden sind.

**Revendications**

**1.** Procédé de production de grains de café grillés foncés ayant une valeur de couleur Hunter $\Delta$L, qui est la différence entre la couleur Hunter L du grain grillé entier et celle du grain grillé moulu, inférieure à 1,2, ledit procédé étant caractérisé en ce qu'il comprend la combinaison d'étapes suivante:

(a) pré-séchage des grains de café verts à une température allant de 21°C à 177°C pendant 1 à 24 heures jusqu'à une teneur en humidité inférieure à 10% en poids;

(b) grillage des grains pré-séchés jusqu'à une couleur Hunter L allant de 12 à 20; et

(c) refroidissement des grains grillés.

**2.** Procédé selon la revendication 1, caractérisé en ce que la teneur en humidité des grains verts préséchés après l'étape (a) est inférieure à 7% et en ce que les grains grillés foncés ont une valeur de couleur Hunter $\Delta$L inférieure à 0,6.

**3.** Produit de grain de café grillé foncé que l'on peut obtenir par le procédé de la revendication 1 ou 2, ledit produit ayant une densité de grain entier allant de 0,28 à 0,45 g/cm$^3$ et une valeur de couleur Hunter L allant de 12 à 18, ledit produit étant caractérisé en ce que la valeur de couleur Hunter $\Delta$L, qui est la différence entre la couleur Hunter L du grain grillé entier et celle du grain grillé moulu, est inférieure à 1,2.

**4.** Produit de grain de café grillé foncé selon la revendication 3 caractérisé en ce que la densité de grain entier est de 0,30 à 0,42 g/cm$^3$, la valeur de la couleur Hunter $\Delta$L est inférieure à 0,6 et la valeur de la couleur Hunter L est de 15 à 18.

**5.** Produit de grain de café grillé foncé selon la revendication 3 ou 4 caractérisé en ce que les grains grillés sont moulus à une taille particulaire moyenne de 100 à 1000 $\mu$m.

**6.** Produit de grain de café grillé foncé selon la revendication 5 caractérisé en ce que les grains grillés sont floconnés.